# FASCICULE DE BREVET EUROPEEN

(11) **EP 3 877 240 B1**
(45) Date de publication et mention de la délivrance du brevet: **26.11.2025**
(21) Numéro de dépôt: 19817389.0
(22) Date de dépôt: 21.10.2019
(51) Int. Cl.: B62D 25/04

(54) **RENFORT DE MONTANT DE BAIE ADAPTÉ AUX VÉHICULES THERMIQUES OU ÉLECTRIQUES**
VERSTÄRCKUNG DER FRONTSCHEIBERAHMEN FÜR FAHRZEUGE MIT VERBRENNNUNGS- ODER ELEKTROMOTOR
WINDSHIELD FRAME REINFORCEMENT FOR INTERNAL COMBUSTION OR ELECTRIC VEHICLE

(30) Priorité: 07.11.2018 FR 1871401
(43) Date de publication de la demande: 15.09.2021
(73) Titulaire: Stellantis Auto SAS, 78300 Poissy (FR)
(72) Inventeur: RIVIERRE, Laurent, 75015 Paris (FR); SAINT DENIS, Lionel, 92290 Chatenay Malabry (FR); MALOIS, Bruno, 95540 Mery Sur Oise (FR); SENECAL, Josselin, 77176 Savigny Le Temple (FR)
(74) Mandataire: BCIP
(86) Numéro de dépôt international: PCT/FR2019/052497
(87) Numéro de publication internationale: WO 2020/094941

(56) Documents cités:
- DE-A1- 102013 214 796
- DE-A1- 102017 127 348
- FR-A1- 2 808 760
- FR-A1- 2 931 123
- JP-A- 2001 328 560
- US-A1- 2004 201 253
- US-A1- 2013 241 238
- US-B1- 6 705 668

## Description

### Domaine technique

La présente invention revendique la priorité de la demande française 1871401 déposée le 07 Novembre 2018.

L'invention a trait au domaine des véhicules automobiles, plus particulièrement au renforcement d'un montant de baie de pare-brise.

### Technique antérieure

Les montants de baie de véhicules automobiles sont généralement consolidés avec un renfort afin d'améliorer leur résistance lors d'un choc frontal. Ce renfort s'étend suivant une direction principale similaire à celle du montant de baie, et présente une portion supérieure s'étendant parallèlement au toit, une portion inférieure s'étendant latéralement au pare-brise du véhicule et une portion coudée située entre les portions inférieure et supérieure. Mais ce renfort peut s'avérer insuffisant, notamment pour ces véhicules lorsqu'ils sont en configuration électrique, en raison du fait qu'ils sont plus lourds, ce qui entraîne plus de dégâts lors d'un choc. De plus, certains protocoles de chocs frontaux ont été rendus plus sévères.

Le document de brevet publié FR 3 041 313 B1 divulgue un montant de baie pour un véhicule automobile présentant des caractéristiques techniques améliorées et une masse réduite. Le montant comprend une paroi formant un côté de caisse de véhicule et une doublure assemblées ensemble, au sein duquel est logé et assemblé par collage un renfort en matériau composite. Ce renfort s'étend longitudinalement dans ledit montant. La structure composite du renfort est avantageuse en ce qu'elle permet de réaliser des formes complexes et présente un rapport raideur/poids élevé. Cette structure présente cependant un surcoût de production et requiert par ailleurs une fixation par collage, nécessitant des étapes spécifiques d'application d'une colle, préférentiellement du type bi-composant.

Le document JP2001328560 décrit un renforcement de montant consistant en une amélioration de la jonction entre un pied avant et une poutre longitudinale de pavillon.

Le document US2004201253 décrit un renfort au sein d'un corps creux de montant avant de véhicule, la forme dudit renfort évoluant selon les évolutions longitudinales de formes du montant.

### Exposé de l'invention

L'invention a pour objectif de pallier au moins un des inconvénients de l'état de la technique susmentionné. Plus particulièrement, l'invention a pour objectif de conférer aux montants de baie d'un véhicule une raideur suffisante pour les configurations électriques ou thermiques renforcées, et ce à un coût réduit.

L'invention a pour objet un renfort de montant de baie de pare-brise de véhicule automobile, comprenant un embouti principal formant un corps creux s'étendant suivant une direction principale avec une portion inférieure destinée à s'étendre le long du pare-brise, une portion supérieure destinée à s'étendre le long du toit du véhicule, et une portion coudée entre les portions inférieure et supérieure ; remarquable en ce que le renfort comprend, dans le corps creux de l'embouti principal, un embouti additionnel s'étendant sur la portion inférieure, la portion coudée et une fraction seulement de la portion supérieure.

Selon un mode avantageux de l'invention, l'embouti principal présente une section transversale en U avec deux parois latérales, et l'embouti additionnel forme une paroi refermant ledit profil en U.

Selon un mode avantageux de l'invention, l'embouti additionnel présente une section transversale avec une portion centrale droite et deux portions latérales inclinées en contact avec les parois latérales du profil en U de l'embouti principal.

Selon un mode avantageux de l'invention, l'embouti additionnel comprend des nervures transversales de raidissement à cheval sur la portion centrale et au moins une des deux portions latérales.

Selon un mode avantageux de l'invention, chacune des nervures de raidissement est formée intégralement dans l'embouti additionnel.

Selon un mode avantageux de l'invention, l'embouti principal présente un orifice, et l'embouti additionnel présente une encoche en face dudit orifice et une nervure longitudinale de raidissement s'étendant suivant la direction principale et contournant l'encoche.

Avantageusement, l'orifice est situé sur la paroi latérale de la section en U de l'embouti principal, qui est en position supérieure lorsque le renfort est en position de montage sur le véhicule. Dans ce cas, il sert à fixer un rail de toit longitudinal ou une barre de toit transversale. Alternativement, l'orifice peut être situé sur la paroi latérale de la section en U de l'embouti principal qui est en position inférieure lorsque le renfort est en position de montage sur le véhicule. Dans ce cas, il sert à recevoir une pointe de retenue d'une pince de fixation d'une barre de toit transversale. L'embouti principal peut présenter de manière cumulative ces deux orifices.

Selon un mode avantageux de l'invention, l'encoche est formée dans une des portions latérales inclinées ainsi que dans la portion centrale de l'embouti additionnel, la nervure longitudinale étant formée dans ladite portion centrale.

L'invention a également pour objet un véhicule automobile comprenant deux montants de baie de pare-brise, remarquable en ce que chacun desdits montants comprend un renfort selon l'invention.

Selon un mode avantageux de l'invention, pour chacun des renforts, l'embouti principal présente un orifice, et l'embouti additionnel présente une encoche en face dudit orifice et une nervure longitudinale de raidissement s'étendant suivant la direction principale et contournant l'encoche, l'orifice de chaque embouti principal étant sur une face supérieure dudit embouti et sert de fixation à un rail de toit longitudinal ou une barre de toit transversale.

Avantageusement, chacun des emboutis, principal et additionnel, présente des orifices pour la fixation desdits emboutis, respectivement, à une doublure du montant de baie ou à l'embouti principal sous-jacent.

L'invention a également pour objet un procédé de dimensionnement des montants de baie de pare-brise d'un modèle de véhicule automobile, comprenant l'étape suivante : renforcement des montants de baie de pare-brise par ajout d'un renfort à l'intérieur de chacun desdits montants ; remarquable en ce qu'à l'étape de renforcement, le renfort est pourvu d'un embouti additionnel, selon l'invention, spécifiquement pour les véhicules du modèle donné qui sont équipés de batteries de traction ou qui doivent satisfaire des tests plus sévères de comportement aux chocs.

Les mesures de l'invention sont intéressantes en ce qu'elles permettent de renforcer à coût réduit le montant de baie d'un véhicule, notamment afin d'améliorer sa résistance à un choc frontal. Il s'agit d'ajouter un embouti additionnel sur l'embouti principal préexistant déjà retrouvé sur les véhicules thermiques « classiques », de manière à consolider, selon les besoins, certaines séries de véhicules thermiques, ou des véhicules électriques. Cet embouti additionnel est facile à fabriquer, peu coûteux et facile à installer sur le véhicule. Le simple fait d'ajouter une embouti additionnel sur l'embouti préexistant permet de limiter l'impact de l'invention sur les différents procédés de fabrication du véhicule en usine. Entre autres, le nombre de points de soudure électrique réalisés pour positionner le ou les renfort(s) sont identiques. De plus, l'augmentation de la masse totale du véhicule est limitée. L'invention permet, en outre, de par la présence des orifices dans chacun des emboutis, de s'adapter à d'autres projets préexistants du véhicule, comme notamment à la fixation de rails de toit longitudinaux. L'ajout d'une nervure longitudinale de raidissement dans l'embouti additionnel, et, plus spécifiquement, sur sa portion supérieure permet en outre d'améliorer la tenue de la pièce en cas de choc frontal et de maintenir la géométrie de la pièce lors de l'emboutissage. En effet, l'embouti additionnel sans nervure longitudinale pourrait vriller, notamment lors de sa fixation sur le montant de baie. Ce vrillage de l'embouti serait dû au détourage de la pièce en deux endroits, détourage qui permet la fixation des rails de toit longitudinaux.

D'autres caractéristiques et avantages de la présente invention seront mieux compris à l'aide de la description et des dessins.

### Brève description des dessins

[Fig 1] est une vue en perspective d'un véhicule automobile selon l'invention ;
[Fig 2] représente une vue latérale d'un renfort de montant de baie selon l'invention ;
[Fig 3] représente une vue de la zone de fixation entre une extrémité postérieure de l'embouti additionnel monté sur l'embouti principal, tel que représenté à la figure 2.

### Description détaillée

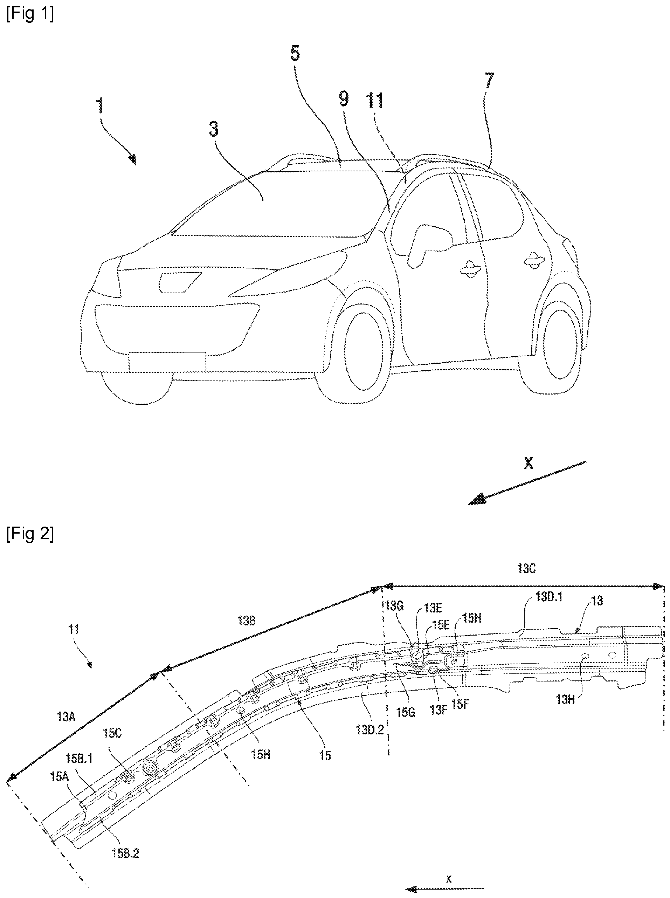

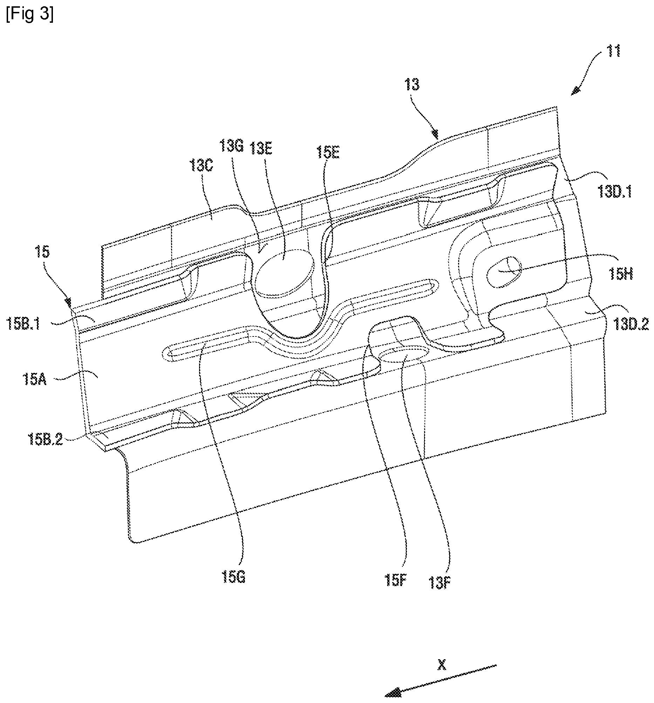

La figure 1 montre une vue en perspective d'un véhicule automobile selon l'invention. Le véhicule 1 comprend un pare-brise 3 surmonté par un toit 5. S'étendant latéralement au pare-brise 3 et au toit 5 se trouvent deux montants 9 de baie de pare-brise 3, qui servent éventuellement de soutien à des rails de toit longitudinaux 7. Les rails de toit longitudinaux 7 servent notamment à rigidifier le toit 5. Chaque montant de baie 9 comprend une enveloppe externe, formée par un embouti de côté de caisse, et une doublure (non visibles sur ces figures), avec, en outre, un renfort 11 monté entre l'enveloppe et la doublure. Le renfort 11 est lui-même constitué par un ou plusieurs emboutis (visibles aux figures 2 et 3), préférentiellement un seul embouti si le véhicule 1 est à énergie thermique ou au moins deux emboutis si le véhicule est à énergie électrique. Il est également possible que certaines séries de véhicules thermiques présentent deux emboutis dans le montant de baie, de manière à le consolider par rapport à des véhicules thermiques « classiques », notamment lorsqu'ils doivent satisfaire des tests de choc plus sévères. La flèche de direction (x) désigne le sens de déplacement du véhicule (figure 1) puis, dans les figures 2 et 3, la direction principale du montant de baie 9 et du renfort 11 associé.

Les figures 2 et 3 montrent, respectivement, une vue du renfort de montant de baie décrit à la figure 1 et un grossissement d'une zone située à l'arrière du renfort. Le renfort 11 comprend un embouti principal 13, retrouvé dans les véhicules thermiques et électriques, et un embouti additionnel 15. L'embouti principal 13 forme un corps creux qui s'étend suivant la direction principale (x). Il est entendu que cette direction n'est pas rectiligne mais bien courbée. Cet embouti principal 13 comprend une portion inférieure 13A qui s'étend le long du pare-brise (visible à la figure 1), une portion supérieure 13C qui s'étend le long du toit (visible à la figure 1) et une portion coudée 13B, située entre les portions supérieure 13C et inférieure 13A. Cet embouti principal 13 présente, en outre, une section transversale en U avec deux parois latérales supérieure 13D.1 et inférieure 13D.2. L'embouti principal 13 comprend, en outre, un orifice 13E, positionné sur la paroi latérale supérieure 13D.1, cet orifice 13E étant apte à accueillir des éléments de fixation (non visibles sur ces figures) d'un rail de toit longitudinal et/ou d'une barre de toit transversale. Cet orifice 13E est avantageusement situé sur une face supérieure 13G de la paroi latérale supérieure 13D.1 de l'embouti principal 13. Avantageusement, l'embouti principal 13 comprend un orifice supplémentaire 13F sur la paroi latérale inférieure 13D.2 apte à recevoir une pointe d'une pince de fixation d'une barre de toit transversale. Cet orifice supplémentaire 13F est avantageusement positionné à l'arrière du premier orifice 13E, suivant la direction principale (x) du renfort 11. L'embouti principal 13 présente, en outre, un orifice de fixation 13H du renfort 11 sur le montant de baie (visible à la figure 1).

Le renfort 11 comprend, en outre, l'embouti additionnel 15 fixé dans le corps creux de l'embouti principal 13. Cet embouti additionnel 15 s'étend sur les portions inférieure 13A, coudée 13B et une fraction seulement de la portion supérieure 13C de l'embouti principal 13. L'embouti additionnel 15 forme une paroi refermant le profil transversal en U de l'embouti principal 13, et présente une section transversale avec une portion centrale droite 15A et deux portions latérales inclinées supérieure 15B.1 et inférieure 15B.2. Chacune des portions latérales inclinées supérieure 15B.1 et inférieure 15B.2 sont respectivement en contact avec les parois latérales supérieure 13D.1 et inférieure 13D.2 du profil en U de l'embouti principal 13. L'embouti additionnel 15 comprend, en outre, des nervures transversales de raidissement 15C, positionnées à cheval sur la portion centrale 15A et au moins une des deux portions latérales inclinées (15B.1, 15B.2). Ces nervures transversales de raidissement 15C sont avantageusement intégralement formées dans l'embouti additionnel 15. L'embouti additionnel 15 comprend également au moins une encoche 15E, en face de l'orifice 13E de l'embouti principal 13, et une encoche supplémentaire 15F en face de l'orifice supplémentaire 13F de l'embouti principal 13. Ces encoches (15E, 15F) servent à faciliter le passage des éléments de fixation des rails de toit longitudinaux, tels que représentés à la figure 1, et/ou à la fixation de barres de toit transversale. L'embouti additionnel 15 comprend, en outre, une nervure longitudinale de raidissement 15G, qui s'étend suivant la direction principale (x) et qui contourne l'encoche 15E. Chaque encoche (15E, 15F) est respectivement formée dans une des portions latérales (15B.1, 15B.2) inclinées ainsi que dans la portion centrale 15A de l'embouti additionnel 15, la nervure longitudinale de raidissement 15G étant formée dans la portion centrale 15A de l'embouti additionnel 15. Cet embouti additionnel 15 comprend également des orifices de fixation 15H pour la fixation de de l'embouti additionnel 15 sur l'embouti principal 13 du renfort 11.

Il est décrit également un procédé de dimensionnement des montants de baie de pare-brise d'un modèle de véhicule automobile, ce procédé étant décrit en relation avec les figures 1 à 3.

L'étape principale du procédé consiste à renforcer les montants de baie 9 de pare-brise 3 par ajout du renfort 11 à l'intérieur de chacun desdits montants 9. Ce renfort 11 comprend l'embouti principal 13, et est également pourvu d'un embouti additionnel 15 spécifique des véhicules 1 du modèle donné, équipés de batteries de traction, ou pour les véhicules 1 thermiques renforcés.

## Revendications

1. Renfort (11) de montant de baie (9) de pare-brise (3) de véhicule automobile (1), comprenant un embouti principal (13) formant un corps creux s'étendant suivant une direction principale (x) avec une portion inférieure (13A) destinée à s'étendre le long du pare-brise (3), une portion supérieure (13C) destinée à s'étendre le long du toit (5) du véhicule (1), et une portion coudée (13B) entre les portions inférieure (13A) et supérieure (13C) ; **caractérisé en ce que** le renfort (11) comprend, dans le corps creux de l'embouti principal (13), un embouti additionnel (15) s'étendant sur la portion inférieure (13A), la portion coudée (13B) et une fraction seulement de la portion supérieure (13C).

2. Renfort (11) selon la revendication 1, **caractérisé en ce que** l'embouti principal (13) présente une section transversale en U avec deux parois latérales (13D.1, 13D.2), et l'embouti additionnel (15) forme une paroi refermant ledit profil en U.

3. Renfort (11) selon la revendication 2, **caractérisé en ce que** l'embouti additionnel (15) présente une section transversale avec une portion centrale droite (15A) et deux portions latérales inclinées (15B.1, 15B.2) en contact avec les parois latérales (13D.1, 13D.2) du profil en U de l'embouti principal (13).

4. Renfort (11) selon la revendication 3, **caractérisé en ce que** l'embouti additionnel (15) comprend des nervures transversales de raidissement (15C) à cheval sur la portion centrale (15A) et au moins une des deux portions latérales (15B.1, 15B.2).

5. Renfort (11) selon la revendication 4, **caractérisé en ce que** chacune des nervures de raidissement (15C) est formée intégralement dans l'embouti additionnel (15).

6. Renfort (11) selon l'une des revendications 1 à 5, **caractérisé en ce que** l'embouti principal (13) présente un orifice (13E, 13F), et l'embouti additionnel (15) présente une encoche (15E, 15F) en face dudit orifice (13E, 13F) et une nervure longitudinale de raidissement (15G) s'étendant suivant la direction principale (x) et contournant l'encoche (15E).

7. Renfort (11) selon l'une des revendications 3 à 5 et selon la revendication 6, **caractérisé en ce que** l'encoche (15E, 15F) est formée dans une des portions latérales (15B.1, 15B.2) inclinées ainsi que dans la portion centrale (15A) de l'embouti additionnel (15), la nervure longitudinale (15G) étant formée dans ladite portion centrale (15A).

8. Véhicule automobile (1) comprenant deux montants de baie (9) de pare-brise (3), **caractérisé en ce que** chacun desdits montants (9) comprend un renfort (11) selon l'une des revendications 1 à 7.

9. Véhicule automobile (1) selon la revendication 8, **caractérisé en ce que** chacun des renforts (11) est selon l'une des revendications 6 et 7, l'orifice (13E) de chaque embouti principal (13) étant sur une face supérieure (13G) dudit embouti (13) et sert de fixation à un rail de toit longitudinal (7) ou une barre de toit transversale.

10. Procédé de dimensionnement des montants de baie (9) de pare-brise (3) d'un modèle de véhicule automobile (1), comprenant l'étape suivante : renforcement des montants de baie (9) de pare-brise (3) par ajout d'un renfort (11) à l'intérieur de chacun desdits montants (9) ; **caractérisé en ce qu'**à l'étape de renforcement, le renfort (11) est pourvu d'un embouti additionnel (15), selon l'une des revendications 1 à 7, spécifiquement pour les véhicules (1) du modèle donné qui sont équipés de batteries de traction ou qui doivent satisfaire des tests plus sévères de comportement aux chocs.

## Patentansprüche

1. Versteifung (11) für einen Frontscheibenschenkel (9) eines Kraftfahrzeugs (1), umfassend eine einen hohlen Körper bildende Hauptkappe (13), die sich in einer Hauptrichtung (x) erstreckt, mit einem unteren Abschnitt (13A), der sich entlang der Frontscheibe (3) erstreckt, einem oberen Abschnitt (13C), der sich entlang des Daches (5) des Fahrzeugs (1) erstreckt, und einem abgewinkelten Abschnitt (13B) zwischen dem unteren Abschnitt (13A) und dem oberen Abschnitt (13C); **dadurch gekennzeichnet, dass** die Versteifung (11) im Hohlkörper des Hauptstutzens (13) einen sich über den unteren Abschnitt (13A) erstreckenden Zusatzstutzen (15) aufweist, wobei der Abschnitt Winkelstück (13B) und nur einen Bruchteil des oberen Teils (13C).

2. Verstärkung (11) nach Anspruch 1, **dadurch gekennzeichnet, dass** der Hauptstempel (13) einen U-förmigen Querschnitt mit zwei Seitenwänden (13D.1, 13D.2) aufweist und der Zusatzstempel (15) eine das U-Profil verschließende Wand bildet.

3. Verstärkung (11) nach Anspruch 2, **dadurch gekennzeichnet, dass** die Ausstanzung Zusätzlicher Querschnitt (15) mit einem Mittelteil
Gerade (15A) und zwei geneigte Seitenabschnitte (15B.1, 15B.2) in Kontakt mit den Seitenwänden (13D.1, 13D.2) des U-Profils des Hauptstempels (13).

4. Verstärkung (11) nach Anspruch 3, **dadurch gekennzeichnet, dass** der zusätzliche Ansatz (15) quer verlaufende Versteifungsrippen (15C) auf dem mittleren Abschnitt (15A) und mindestens einen der beiden seitlichen Abschnitte (15B.1, 15B.2) umfasst.

5. Verstärkung (11) nach Anspruch 4, **dadurch gekennzeichnet, dass** jede der Versteifungsrippen (15C) einstückig in dem zusätzlichen Ansatz (15) ausgebildet ist.

6. Verstärkung (11) nach einem der Ansprüche 1 bis 5, **dadurch gekennzeichnet, dass** Der Hauptstempel (13) weist eine Öffnung (13E, 13F) auf, und der Zusatzstempel (15) weist gegenüber der Öffnung (13E, 13F) eine Kerbe (15E, 15F) und eine sich in Hauptrichtung (x) erstreckende, die Kerbe (15E) umgreifende Versteifungslängsrippe (15G) auf.

7. Verstärkung (11) nach einem der Ansprüche 3 bis 5 und nach Anspruch 6, **dadurch gekennzeichnet, dass** die Kerbe (15E, 15F) in einem der geneigten Seitenabschnitte (15B.1, 15B.2) sowie im mittleren Abschnitt (15A) des zusätzlichen Ansatzes (15) ausgebildet ist, wobei die Längsrippe (15G) in dem mittleren Abschnitt (15A) ausgebildet ist.

8. Kraftfahrzeug (1) mit zwei Auslegerstützen (9) für Windschutzscheiben (3), **dadurch gekennzeichnet, dass** jede der Auslegerstützen (9) eine Verstärkung aufweist 5(11) nach einem der Ansprüche 1 bis 7.

9. Kraftfahrzeug (1) nach Anspruch 8, **dadurch gekennzeichnet, dass** jede der Verstärkungen (11) nach einem der Ansprüche 6 und 7 ist, wobei die Öffnung (13E) jedes Hauptstempels (13) auf einer Oberseite (13G) des Stempels (13) angeordnet ist und zur Befestigung an einer Längsdachschiene (7) oder einem 10-Querdachstab dient.

10. Verfahren zum Dimensionieren der Frontscheibenschenkel (9) eines Kraftfahrzeugmodells (1), das den folgenden Schritt umfasst: Verstärkung der Frontscheibenschenkel (9) eines Kraftfahrzeugmodells (3) durch Hinzufügen einer Verstärkung (11) innerhalb jedes der Schenkel (9); **dadurch gekennzeichnet, dass** die Verstärkung (11) in dem Schritt des 15-fachen Verstärkens mit einer zusätzlichen Prägung (15) nach einem der Ansprüche 1 bis 7 versehen wird, insbesondere für Fahrzeuge (1) des gegebenen Modells, die mit Antriebsbatterien ausgestattet sind oder die müssen strengere Prüfungen des Aufprallverhaltens bestehen.

## Claims

1. Reinforcement (11) of a window post (9) of a motor vehicle windscreen (3) (1), comprising a main stamped portion (13) forming a hollow body extending along a main management (x) with a lower portion (13A) intended to extend along the windscreen (3), an upper portion (13C) intended to extend along the roof (5) of the motor vehicle (1), and an angled portion (13B) between the lower portion (13A) and upper portion (13C); wherein the reinforcement (11) comprises, in the hollow body of the main press (13), an additional press (15) extending over the lower portion (13A), the portion bend (13B) and only a fraction of the upper portion (13C).

2. Reinforcement (11) according to claim 1, wherein the main press-formed portion (13) has a *U-*shaped cross-section with two lateral walls (13D.1, 13D.2), and the additional press-formed portion (15) forms a wall enclosing said U-shaped profile.

3. Reinforcement (11) according to claim 2, **characterised in that** the stamped portion The additional element (15) has a cross-section with a central portion
straight line (15A) and two inclined lateral portions (15B.1, 15B.2) in contact with the lateral walls (13D.1, 13D.2) of the U-shaped profile of the main press-formed part (13).

4. Reinforcement (11) according to claim 3, **characterised in that** the additional stamped portion (15) comprises transverse stiffening ribs (15C) straddling the central portion (15A) and at least one of the two lateral portions (15B.1, 15B.2).

5. Reinforcement (11) according to claim 4, **characterised in that** each of the stiffening ribs (15C) is formed integrally in the additional press-formed portion (15).

6. Reinforcement (11) according to one of Claims 1 to 5, **characterised in that** the main press-formed portion (13) has an orifice (13E, 13F), and the additional press-formed portion (15) has a notch (15E, 15F) facing said orifice (13E, 13F) and a longitudinal stiffening rib (15G) extending along the main management (x) and passing around the notch (15E).

7. Reinforcement (11) according to one of Claims 3 to 5 and according to Claim 6, **characterised in that** the notch (15E, 15F) is formed in one of the inclined lateral portions (15B.1, 15B.2) as well as in the central portion (15A) of the additional drawing (15), the longitudinal rib (15G) being formed in the said central portion (15A).

8. Motor vehicle (1) comprising two windscreen bay uprights (9) (3), **characterised in that** each of said uprights (9) comprises a reinforcement 5(11) according to one of claims 1 to 7.

9. Motor vehicle (1) according to claim 8, **characterised in that** each of the reinforcements (11) is according to one of claims 6 and 7, the orifice (13E) of each main stamped portion (13) being on an upper face (13G) of said stamped portion (13) and serving as a fastener for a longitudinal roof rail (7) or a bar of 10 transverse roofs.

10. Method for sizing the window sills (9) of a motor vehicle model (1) (3), comprising the following step: reinforcing the window sills (9) of a windscreen (3) by adding a reinforcement (11) inside each of said sills (9); **characterised in that** in the step of 15 reinforcement, the reinforcement (11) is provided with an additional press-formed part (15), according to one of claims 1 to 7, specifically for the vehicles (1) of the given model which are equipped with traction batteries or which must meet more stringent shock behaviour tests.
